# EUROPEAN PATENT APPLICATION

(11) **EP 2 363 819 A1**
(43) Date of publication of application: **07.09.2011**
(21) Application number: 11152998.8
(22) Date of filing: 02.02.2011
(51) Int. Cl.: G06F 17/50

(54) **Method for simulation of welding distortion**

(30) Priority: 03.02.2010 JP 2010022232
(71) Applicant: Hitachi Ltd., Tokyo (JP)
(72) Inventor: Zhang, Xudong, Tokyo 100-8220 (JP)
(74) Representative: Beetz & Partner

(57) **Abstract**

It is an object of the present invention to accomplish both improvement of a calculation precision and reduction of a calculation time in prediction of a welding distortion of a large welded structure. A method of modeling a welded structure subjected to analysis by generating a mesh and performing thermo-elastic-plastic analysis thereon constructs a global model of the welded structure, and extracts a local model including a welded part from the global model. Next, the method constrains a boundary part of the extracted local model with the remaining portion of the global model, performs thermo-elastic-plastic analysis, and pastes the local model including the analysis result of the thermo-elastic-plastic analysis on the remaining portion of the global model, thereby reconstructing the global model. Thereafter, the method releases the constraint on the boundary part, and performs elastic analysis on the global model, thereby calculating a distortion of the welded structure.

## Description

### BACKGROUND OF THE INVENTION

### Field of the Invention

The present invention relates to a method for calculating a distortion of a welded structure (hereinafter, may be simply referred to as a "structure" in some cases) and a residual stress thereof, etc., through a numerical analysis.

### Description of the Related Art

When a large structure is made through welding, a welding distortion is produced because of thermal accumulation to the vicinity of a welded part and cooling thereafter. In order to reduce such welding distortion, in general, attachment of a restraint jig and reformation after welding are performed. According to such a situation, it is very important to predict a distortion through a numerical analysis like a finite element method and to ensure appropriate distortion countermeasure from the standpoint of improvement of the production efficiency and reduction of the cost.

According to the welding distortion simulation through a finite element method, there are mainly two schemes: a thermo-elastic-plastic analysis; and an inherent strain method. The welding distortion simulation through the thermo-elastic-plastic analysis obtains a heat history in welding through a nonstationary thermal conduction analysis of a welded structure which is the analysis target, and analyzes a displacement, a strain and the history of stress in welding through the thermo-elastic-plastic analysis which is a nonlinear analysis.

On the other hand, the welding distortion simulation through the inherent strain method gives an inherent strain produced at a welded part and the vicinity thereof to a welded structure, and calculates a welding distortion through a (thermal) elastic analysis which is a linear analysis. The inherent strain produced by welding is a value obtained by subtracting an elastic strain from an apparent strain, and is equal to a residual plastic strain in the field of solid mechanics.

In order to estimate a welding distortion of a welded structure and a residual stress thereof through the inherent strain method, the following steps are taken. First, an inherent welding distortion and a residual stress produced by actual welding are calculated, or a welding distortion and a residual stress are obtained through the thermo-elastic-plastic analysis using a unit model having a welding technique applied to the welded structure, a joint shape, a welding condition, etc., being patterned, and those obtained data are taken as an appropriate value of distortion and are stored in a database. Next, the appropriate value of distortion stored in the database is given to a model of the welded structure, and a welding distortion and a residual stress are calculated through the elastic analysis.

JP 2009-36669 A discloses a welding residual stress analysis method which has a high analysis precision and which is capable of reducing a calculation time through a thermo-elastic-plastic analysis using a two-dimensional model with a thermal distortion result obtained by a thermal elastic analysis using a three-dimensional model being as a distortion constraint condition.
JP 2004-330212 A discloses an analysis method which converts individual inherent strains obtained by analyzing the model of a whole welded structure through the inherent strain method that is the linear analysis to a local coordinate system in order to calculate a welding distortion and a residual stress.
JP 2003-194637 A discloses an analysis method which reduces an analysis time by limiting an axial-direction distance from a welding line to an analysis model boundary when a welded structure is analyzed through a residual stress finite element method.
JP 2006-879 A discloses an analysis method which obtains a welding distortion when a constraint condition after welding is released using a welding inherent strain obtained from the constraint condition.
WO 2005/093612 A discloses an analysis method which calculates a welding distortion in a short time by performing a nonlinear analysis on only the vicinity of a welded part, calculating reactive forces at respective limit surfaces of both regions through a linear analysis on an object to be welded, and performing convergence calculation so that a difference between the reactive forces becomes within a predetermined range.

### SUMMARY OF THE INVENTION

Because the distortion analysis through the thermo-elastic-plastic analysis analyzes steps from the beginning of welding to the end thereof at short time intervals, a distortion history similar to actual welding can be simulated. However, when a welded structure is large, a large number of elements are needed for an analysis model, and a long period of calculation time is necessary for the thermo-elastic-plastic analysis. Therefore, the possibility of the application of this analysis is poor in some cases.
The analysis method of JP 2009-36669 A can reduce the calculation time because the target of the thermo-elastic-plastic analysis is a two-dimensional model. However, because a two-dimensional model cannot be applied to a welding distortion of a complex and large structure in many cases, application of this method is limited.

The distortion analysis through the inherent strain method can remarkably reduce the calculation time because a distortion can be calculated through an analysis merely by an elastic analysis on a structure. However, it is not easy to give an inherent strain distribution obtained by calculation to the whole welded structure.

That is, because a mesh of a model used for the thermo-elastic-plastic analysis of each unit model differs from that of a model of a welded structure actually calculated, an error is likely to occur due to a conversion between coordinates when an inherent strain stored in a database is given to the model of the welded structure from the unit model. As a result, an inherent strain distribution different from actual welding is given to the structure model in some cases.

Also, a constraint condition to the unit model used when an inherent strain is obtained does not reflect the constraint condition of a welded structure in general. For this reason, an inherent strain distribution given to the structure model and obtained from the unit model differs from the inherent strain distribution of the actual structure produced by actual welding. A distortion calculated by giving the inherent strain obtained under a constraint condition which differs from that of the actual structure to the structure model often does not match a distortion tendency of an actual welded structure.

JP 2004-330212 A, JP 2003-194637 A, and JP 2006-879 A disclose various inherent strain methods, and can accomplish an improvement in the calculation precision and reduction of the calculation time by coordinate-system conversion, simplification of an analysis model, or reduction of a calculation range. However, it is difficult to calculate a strain or a stress distribution originating from a distortion of the whole structure.

The analysis method disclosed in WO 2005/093612 A takes a time for convergence calculation in the case of a large structure.

The present invention has been made in view of the foregoing circumstances, and it is an object of the present invention to accomplish both the improvement in calculation precision and the reduction of the calculation time in a welding distortion prediction for a large welded structure.

The feature of the present invention that accomplishes the above object is, so to say, a partial thermo-elastic-plastic analysis (referred to as a "welding distortion simulation" in some cases) which performs thermo-elastic-plastic analysis on only a welded part and the vicinity thereof without calculating an inherent strain and giving it to a structure (mapping).

More specifically, the welding distortion simulation method of the present invention includes a step of converting a structure that is an analysis target into a global model through a mesh generating step and of extracting a local model including a welded part needing a partial thermo-elastic-plastic analysis from the global model of the welded structure which is a distortion simulation target and which needs an elastic analysis, a step of giving constraints to the local model and a remaining portion of the global model, and of performing thermo-elastic-plastic analysis on the local model, a step of pasting the local model including final strain distribution and stress distribution after welding obtained through the thermo-elastic-plastic analysis on the remaining portion of the global model after completion of the step of the thermo-elastic-plastic analysis on the local model in order to reconstruct the global model, and a step of performing elastic analysis on the global model in order to obtain a welding distortion of the structure and a stress thereof.

Because the local model is directly extracted from the global model, configurations and relative coordinate relationships of the element formed by meshes of the local model and the nodes thereof are consistent with those of a part of the global model.

When thermal analysis is performed on the local model, an appropriate constraint is given to a boundary part which is formed through the step of extracting the local model, is between the local model and the remaining portion of the global model, and is not present in reality in the actual structure. At this time, a constraint condition to the boundary part is set in consideration of the constraint situation of the actual structure.

Reconstruction of the global model may be carried out by pasting the local model which satisfies a constraint condition given when thermo-elastic-plastic analysis is performed on the local model and which includes final strain distribution and stress distribution after completion of welding obtained through the thermo-elastic-plastic analysis on the global model. Alternatively, the remaining portion of the global model after the local model is extracted may be pasted on the local model including the final strain distribution and stress distribution after completion of welding obtained through the thermo-elastic-plastic analysis.

When a welding distortion of the structure is calculated through an elastic analysis on the global model, a constraint condition given at the time of thermo-elastic-plastic analysis on the local model is released, a constraint condition similar to the actual structure is set instead, and the elastic analysis is performed, thereby obtaining a welding distortion of the whole structure and a stress thereof.
The detail of the present invention will be discussed in a following embodiment.

According to the present invention, both the improvement in calculation precision and the reduction of the calculation time in a welding distortion prediction for a large welded structure can be accomplished.

### BRIEF DESCRIPTION OF THE DRAWINGS

FIG. 1 is a diagram showing a hardware configuration of a simulation device according to an embodiment and a software configuration thereof;
FIG. 2 is a flowchart showing a welding distortion simulation process through a finite element method;
FIG. 3 is a diagram showing a configuration of a welded structure as an analysis target;
FIG. 4 is a diagram showing a global model of the welded structure shown in FIG. 3;
FIG. 5 is a diagram showing an extracted local model;
FIG. 6 is an enlarged view showing a boundary part of the local model;
FIG. 7 is a diagram showing a global model reconstructed;
FIG. 8 is a diagram showing a local model;
FIG. 9 is a comparison table of an analysis time and an analysis precision among a welding distortion simulation method of the present invention, a conventional thermo-elastic-plastic analysis, and a conventional inherent strain analysis; and
FIG. 10 is a diagram showing how a global model is reconstructed according to a second example.

### DETAILED DESCRIPTION OF THE PREFERRED EMBODIMENTS

Next, an explanation will be given of an embodiment of the present invention with reference to the accompanying drawings.

### «Configuration»

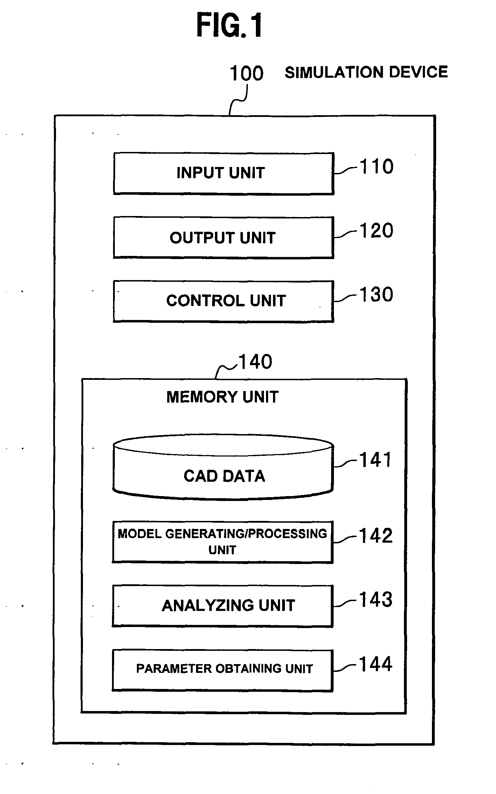

FIG. 1 is a diagram showing a hardware configuration of a simulation device according to an embodiment and a software configuration thereof. A simulation device 100 shown in FIG. 1 is a computer that includes an input unit 110, an output unit 120, a control unit 130, and a memory unit 140 as hardware configurations. The simulation device 100 stores CAD (Computer-Aided Design) data 141 and also stores a program for a welding distortion simulation method which realizes a model generating/processing unit 142, an analyzing unit 143, and a parameter obtaining unit 144 which are software configurations in the memory unit 140.

The input unit 110 is, for example, a mouse and a keyboard to be operated by user, and also includes an input interface that transmits an input signal given by the user to the control unit 130.

The output unit 120 is a display that displays, for example, CAD data of a welded structure subjected to analysis and a model thereof, and a calculation result of a numerical analysis, and includes an output interface that displays a predetermined image in accordance with instructions (including a drawing instruction) from the control unit 130.

The control unit 130 is, for example, a CPU (Central Processing Unit), reads a code written in the program stored in the memory unit 140, and executes a corresponding information process (including a calculation process of numerical analysis).

The memory unit 140 is a ROM (Read Only Memory), a RAM (Random Access Memory), an HDD (Hard Disc Drive), etc., and stores, as explained above, the CAD data 141 and the program that realizes the model generating/processing unit 142, the analyzing unit 143, and the parameter obtaining unit 144.

The CAD data 141 is, for example, three-dimensional data generated by CAD designing on a welded structure subjected to analysis. The CAD data 141 includes a physicality value representing the physicality of the welded structure. The CAD data 141 may be obtained from the exterior like a database server connected to a network by the simulation device 100 including a communication interface (unillustrated) connected to that network.

The model generating/processing unit 142 generates a three-dimensional analysis model (simply referred to a "model" in some cases) of the welded structure from the CAD data 141, and processes it in accordance with an input through the input unit 110. When a model is generated, a shape subjected to an analysis is obtained from the CAD data 141, and a mesh is also generated in accordance with a mesh configuration specified based on an input through the input unit 110. Once the shape is obtained, for example, the position of the welded structure can be defined by coordinate values of a three-dimensional coordinate system (the coordinate axes are orthogonal to one another in this embodiment) set beforehand in the model, a physicality value of a substance of a part located at that coordinate value is defined, and stored in the memory unit 140. The physicality value is obtained from the CAD data 141.

Processing of the model includes extraction of a local model to be discussed later, constraint of nodes of a mesh, releasing thereof, reconstruction of a global model, etc..
The generated or processed model (including a global model and a local model) is stored in the memory unit 140.

The analyzing unit 143 performs numerical analysis on the generated or processed model, and obtains a predetermined analysis result. The numerical analysis performed in this embodiment includes, for example, a thermo-elastic-plastic analysis which is a nonlinear analysis, an elastic analysis which is a linear analysis. When an inherent strain method is applied in this embodiment, the analyzing unit 143 performs it.

The parameter obtaining unit 144 obtains a parameter specified by, for example, an input through the input unit 110. The parameters are values, conditions, etc., necessary to generate and process a model by the model generating/processing unit 142 and to carry out a numerical analysis by the analyzing unit 143. More specifically, the parameters include an initial condition relating to a mesh configuration (e.g., the number of meshes used, a size, and a shape), a boundary part between a local model and a global model defined when the local model is extracted from the global model, or a constraint condition of nodes of a mesh (e.g., a node of a mesh subjected to constraint, and a direction in which that node is constrained (at least one of an X direction, a Y direction, and a Z direction).

The term "constraint" of the node of a mesh means to make the displacement of that node to be zero even if a numerical analysis is performed. According to this constraint, the reference of a position of an analysis model in a numerical analysis is defined. In the case of a three-dimensional analysis model, constraint of at least six freedom degrees is necessary in order to carry out a numerical analysis. However, the position of a node and a direction thereof subjected to constraint are not limited to any particular ones.
The explanation for the configuration of the simulation device according to this embodiment ends now.

### «Process»

Next, an explanation will be given of a process executed by the simulation device 100 according to this embodiment. This process, i.e., the process mainly relating to a welding distortion simulation is realized by reading the program stored in the memory unit 140 in the memory area like the RAM under the control of the control unit 130.

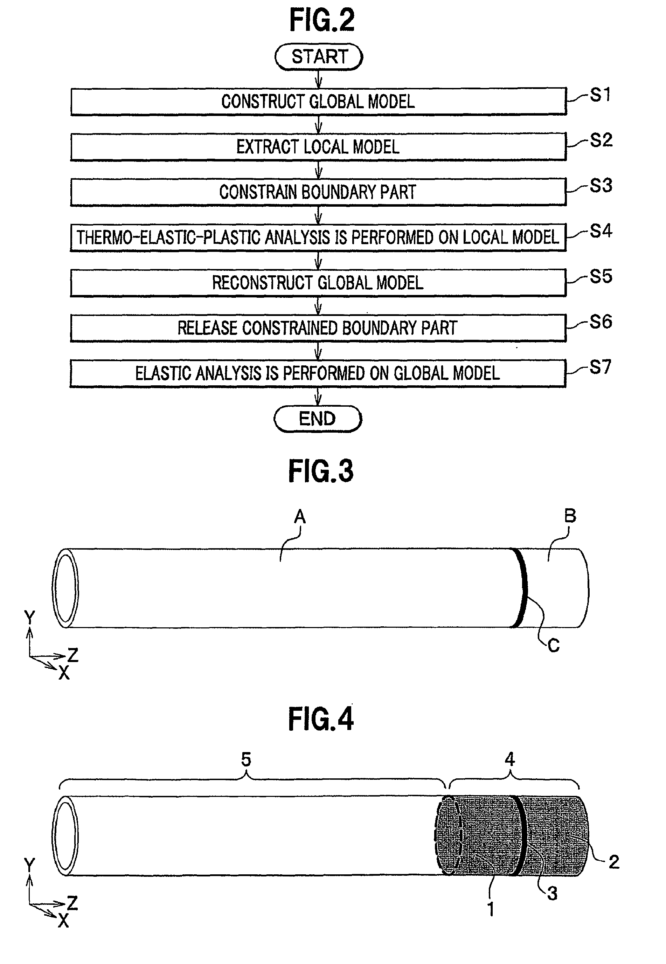

FIG. 2 is a flowchart showing a process of the welding distortion simulation through a finite element method according to this embodiment. This control is mainly executed by the control unit 130.

According to this process, first, a welded structure subjected to an analysis is converted into a three-dimensional analysis model, and a global model is constructed (step S1). When the global model is constructed, in order to obtain a sufficient analysis precision through a thermo-elastic-plastic analysis, fine (precise) meshes are set to a range including a welded part of the welded structure and the vicinity thereof where a thermo-elastic-plastic analysis is necessary. Rough meshes are set to other ranges because only elastic analysis is performed.

The size of a mesh of a range where only elastic analysis is performed is from severalfold to several ten times of a mesh size of a range where the thermo-elastic-plastic analysis is necessary. As a result, the number of elements of the global model decreases, and the calculation time can be reduced. The size of a mesh and the number of elements are obtained as parameters by the parameter obtaining unit 144.

Next, elements of a range where the thermo-elastic-plastic analysis is necessary including the welded part and the vicinity thereof are extracted from the constructed global model, and are set as a local model for thermo-elastic-plastic analysis (step S2). Because the local model is directly extracted from the global model, the number of generation of a model and that of a mesh are each limited to once and the number of steps of generating a mesh can be reduced. In extraction of the local model, the parameter obtaining unit 144 obtains and sets parameters which are a boundary part of the local model and the boundary part of the remaining portion of the global model.

Next, after the local model is extracted, an appropriate constraint condition is given to the boundary part of the local model in order to make the boundary part constrained (step S3), and thermo-elastic-plastic analysis is performed on the local model (step S4). The boundary part of the local model is a boundary face with the remaining portion of the global model. Also, the constraint condition of the boundary part is set in consideration of the constraint situation of the actual structure. The constraint is also performed on the boundary part formed at the remaining portion of the global model. This constraint is set as a parameter by the parameter obtaining unit 144.
In addition, although it is preferable to perform the thermo-elastic-plastic analysis with nodes of the boundary part of the local model being constrained, the thermo-elastic-plastic analysis may be performed on the local model with the nodes of the boundary part being not constrained. Also, the constraint of a node of the boundary part of the local model (and the boundary part of the remaining portion of the global model) may be performed on all of the nodes, or may be performed on some nodes.

Next, after the thermo-elastic-plastic analysis on the local model completes, a local model including analysis results which are a thermal distribution, a stress distribution and a strain distribution is pasted on (fitted to) the remaining portion of the global model, or the remaining portion of the global model other than the local model is pasted on (fitted to) the local model including the results of the thermo-elastic-plastic analysis, thereby reconstructing a global model for an elastic analysis (step S5).
When the boundary part of the local model is not constrained at the time of thermo-elastic-plastic analysis on the local model, in order to reconstruct the global model for an elastic analysis, the mesh of the global model is pasted on the local model in such a way that the nodes of the boundary part of the remaining portion of the global model match the nodes of the boundary part of the local model.

After the global model is reconstructed, the constraint condition to the boundary part of the local model is released, in order to release the boundary part (step S6), and the same constraint condition (e.g., constraint of an end of a structure which will be discussed later in detail) as the actual structure is set using the reconstructed global model. Next, an elastic analysis is carried out in order to calculate a distortion of the structure (step S7).
The explanation for the process by the simulation device of this embodiment ends now.

### <Example 1>

Next, an explanation will be given of a first example in which the simulation method of this embodiment is applied to a welded structure having a specific shape defined.
FIG. 3 is a diagram showing a configuration of a welded structure as an analysis target. The welded structure is a pipe structure, and includes a to-be-welded member A and a to-be-welded member B both joined by circumferential welding C. The structure after welding has a length of substantially 5 m, a diameter of substantially 200 mm and a thickness of 7 to 13 mm.

The welded structure shown in FIG. 3 is converted into a finite element model, thereby generating a three-dimensional model. A mesh generating step (a part of the process by the model generating/processing unit 142) is performed on this three-dimensional model, and a global model is constructed.

FIG. 4 is a diagram showing a global model of the welded structure shown in FIG. 3. The global model includes a local model 4 (a meshed part) having a to-be-welded part 1 that is a model corresponding to a part of the to-be-welded member A, a to-be-welded part 2 that is a model corresponding to a part of the to-be-welded member B, and a welded part 3 that is a model corresponding to the circumferential welding C (welded part), and a remaining portion 5 of the global model including the to-be-welded parts which is a model corresponding to the remaining portion of the to-be-welded member A.

When a mesh of the global model is generated, the range where a thermo-elastic-plastic analysis is necessary including the welded part 3 and the vicinity thereof is set as the local model 4, and a fine mesh is set. Because only elastic analysis is performed on other ranges, i.e., the remaining portion 5 of the global model, a rough mesh is generated. The size of the mesh of the local model 4 needing the thermo-elastic-plastic analysis is set to be several fractions to several tithes as much as the size of the mesh of the remaining portion 5 of the global model needing the elastic analysis. However, in order to facilitate an explanation, the illustration of the set mesh is omitted in FIG. 4.

The mesh of the local model 4 needing the thermo-elastic-plastic analysis is remarkably smaller than the mesh of the remaining portion 5 of the global model where only elastic analysis is performed. However, meshes having substantially same size may be set to both remaining portion 5 of the global model and local model 4. This is because the time needing for the elastic analysis is several thousandth as much as the time needing for the thermo-elastic-plastic analysis even if the numbers of elements are same. That is, if the remaining portion 5 of the global model is divided into fine pieces as much as the local model, the number of elements increases. However, the meshes corresponding to such an increase are merely subjected to an elastic analysis, and the thermo-elastic-plastic analysis on the local model 4 is dominant in the whole analysis time. Therefore, the increase of the whole analysis time is small which is ignorable relative to the time for the thermo-elastic-plastic analysis.

The mesh dividing on the model of this example is set in consideration of an actual welding condition and a welded bead cross-sectional shape. It is preferable that the element type should be a hexagonal element having a high analysis precision. Also, a tetrahedral element, a triangular element, or combined elements thereof may be used.

The scale of the global model generating hexagonal meshes is substantially 100000 elements and 150000 nodes. The scale of the local model part including the vicinity thereof needing the thermo-elastic-plastic analysis among those is substantially 25000 elements and 40000 nodes. Welding is a one-path welding by laser/arc hybrid welding, and a composite moving heat source that is a linear Gaussian heat source (corresponding to a laser heat source) and a point Gaussian heat source (corresponding to an arc heat source) is used as a heat source model. The heat input condition for analysis is set in consideration of the actual welding condition and the welded bead cross-sectional shape. The welding time is 90 seconds which is same as that of actual welding.

After the global model including a local model where fine meshes are set is generated, a range needing thermo-elastic-plastic analysis and including the welded part and the vicinity thereof in the generated global model is set as the local model 4, and a step of extracting the local model (a part of the process by the model generating/processing unit 142) is carried out.

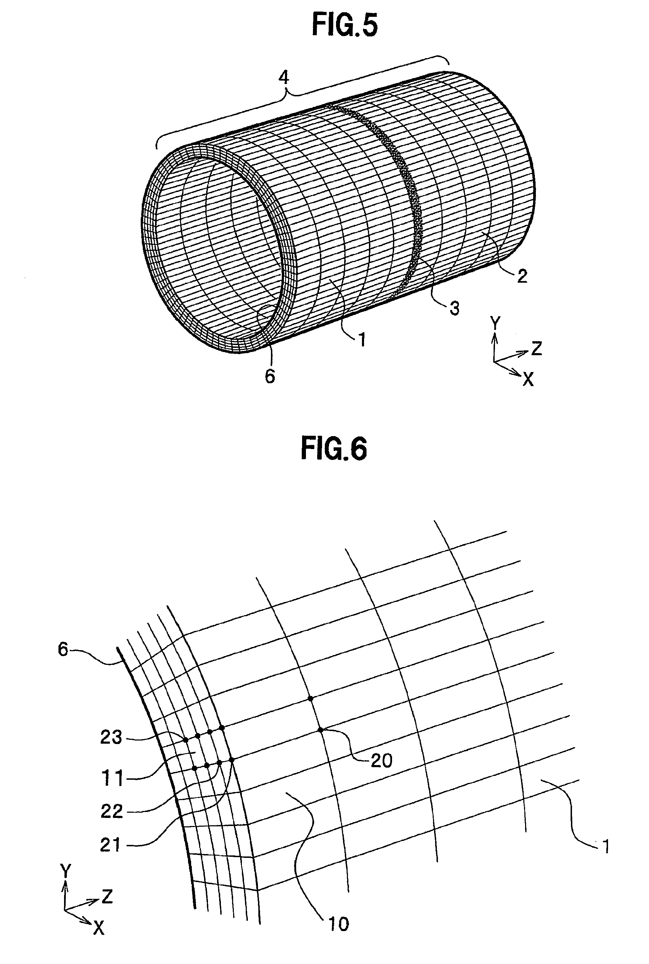

FIG. 5 is a diagram showing an extracted local model. The meshes of the local model 4 completely match the mesh configuration of the local model 4 that is a part of the global model shown in FIG. 4. For example, a coordinate value of a node of the extracted mesh has the same value as the mesh before extraction. At the time of extraction, a boundary part 6 that is a boundary face from the remaining portion 5 of the global model is formed in the local model 4, and the position of the boundary part 6 is set by the parameter obtaining unit 144.

Next, thermo-elastic-plastic analysis is performed using the extracted local model 4. The thermo-elastic-plastic analysis on the local model 4 includes following first to three steps.

In the first step of the thermo-elastic-plastic analysis on the local model 4, thermal analysis is executed. As a specific flow, first, a heat input condition simulating the actual welding condition is set, and steps from the beginning of welding to the completion thereof are subjected to thermal analysis at minute time interval, thereby calculating a heat history similar to actual welding. As a result, a history of temperature distribution at the welded part 3 and the vicinity thereof is obtained.
In addition, although the local model 4 is used when a heat history of the local model 4 is calculated, thermal analysis may be executed using the global model. In this case, however, it is necessary that the temperature distribution history (heat history) of the welded part 3 and the vicinity thereof obtained by calculation simulates the heat history of actual welding.

In the second step of the thermo-elastic-plastic analysis on the local model 4, a constraint condition for the boundary part 6 which is a necessary condition at the time of thermo-elastic-plastic analysis to be executed in the following third step is set. The boundary part 6 is a boundary face on an analysis between the local model 4 and the remaining portion 5 of the global model and formed through the extraction step of the local model 4, and the actual structure has no such a boundary face. Note that the nodes of the boundary face of the remaining portion 5 of the global model are also constrained.

FIG. 6 is an enlarged view of the boundary part of the local model. An explanation will be given of how to set a constraint condition for the boundary part of the local model with reference to FIG. 6. An analysis model of this embodiment includes, as is indicated by reference numerals 10 and 11, hexagonal elements. Each hexagonal model has eight nodes as is indicated by reference numerals 20 to 23. Here, the node 20 does not belong to the boundary face of the boundary part 6 of the local model 4, and the nodes 21 to 23 belong to the boundary face of the boundary part 6. Accordingly, setting of the constraint condition for the boundary part 6 of the local model 4 is made by giving a constraint condition to a node on the boundary face of the boundary part 6 like the nodes 21 to 23.

The constraint condition of the boundary part 6 is set in consideration of the constraint situation of the actual structure. In the case of this example, respective displacements in the X, Y, and Z directions which are coordinate directions shown in the figure are set to be zero at all nodes on the boundary part 6 like the nodes 21 to 23 shown in FIG. 6.

In the third step of the thermo-elastic-plastic analysis on the local model, after the constraint condition for the boundary part 6 is set, nonlinear thermo-elastic-plastic analysis is executed with the analysis result of the heat history of the local model 4 obtained through the first step of the thermo-elastic-plastic analysis being as an input condition. A strain history of the local model 4 and a stress history thereof are obtained through the analysis in the third step.

Next, using the result of the thermo-elastic-plastic analysis on the local model 4, the global model of the structure is reconstructed, elastic analysis is performed on the reconstructed global model, thereby calculating a distortion of the structure. The elastic analysis on the global model also includes the first to third steps.

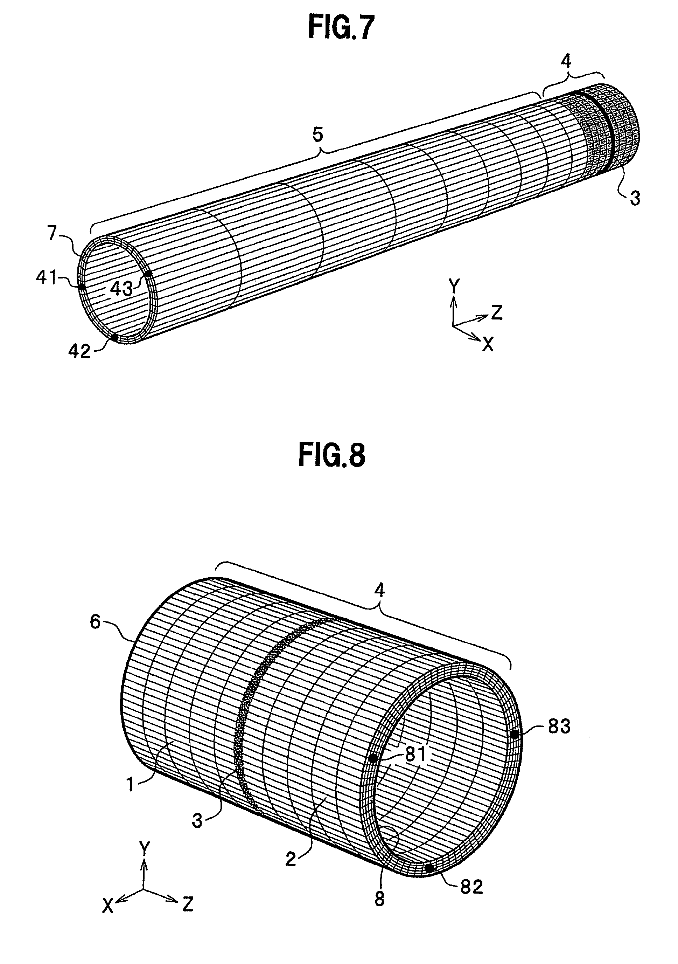

FIG. 7 is a diagram showing a reconstructed global model.

In the first step of the elastic analysis on the global model, the local model 4 including the result of the thermo-elastic-plastic analysis is pasted on the global model, thereby reconstructing the global model shown in FIG. 7. Because the nodes on the boundary face between the local model 4 and the remaining portion 5 of the global model are constrained when the thermo-elastic-plastic analysis on the local model 4 is executed, pasting of the local model 4 on the remaining portion 5 of the global model can be easily realized. Also, the strain distribution and the stress distribution obtained through the thermo-elastic-plastic analysis on the local model 4 are also pasted on the remaining portion 5 of the global model. As a result, the reconstructed global model includes information, such as the strain distribution and the stress distribution around the welded part obtained through the thermo-elastic-plastic analysis on the local model 4.

The local model 4 is pasted on the remaining portion 5 of the global model when the global model is reconstructed. Conversely, meshes of the remaining portion 5 left by extracting the local model 4 may be pasted on the local model 4 including the result of the thermo-elastic-plastic analysis.

In the second step of the elastic analysis on the global model, the constraint condition for the boundary part 6 of the local model set at the time of thermo-elastic-plastic analysis on the local model 4 is released, and a constraint condition which is capable of simulating a constraint of the actual structure is set instead. In the case of this example, as shown in FIG. 7, three constraints in the X, Y, and Z directions are set for the node 41 belonging to an end 7 of the global model, constraints in the Y and Z directions are set for the node 42, and a constraint in the Z direction is set for the node 43.

In the third step of the elastic analysis on the global model, the global model including the strain distribution of the local model 4 and the stress distribution thereof and having a constraint condition newly set (the constraint of the end 7) is used, and elastic analysis is executed in order to calculate a distortion of the structure.

### <Comparison with Prior Art>

For comparison, using an analysis target of this embodiment shown in FIG. 3, analysis was carried out through a conventional thermo-elastic-plastic analysis, a conventional inherent strain method, and the partial thermo-elastic-plastic analysis of the present invention, and the three analyses were compared one another for a requisite time until an analysis result is obtained and an analysis precision.

When the conventional thermo-elastic-plastic analysis was executed, the global model of this embodiment was used. The mesh configuration of that model was same as that of the global model shown in FIG. 7 of this embodiment. However, because the conventional thermo-elastic-plastic analysis needed a thermo-elastic-plastic analysis on the global model, the global information included all pieces of information which are the results of a thermo-elastic-plastic analysis, such as a temperature, a stress, a strain, and distortion amount. Because welding was a one-path welding through laser/arc hybrid welding, a composite moving heat source which was a linear Gaussian heat source (corresponding to a laser heat source) and a point Gaussian heat source (corresponding to an arc heat source) was used as a heat source model. A heat input condition for analysis was set in consideration of an actual welding condition and a welded bead cross-sectional shape. A welding time was set to be 90 seconds which was same as that of actual welding.

After the welding condition (the heat input condition) of the above-explained analysis model was set, the same analysis technique as the thermo-elastic-plastic analysis method of the local model 4 which was explained in this embodiment was executed in order to execute thermo-elastic-plastic analysis on the global model (following first to third steps).

In the first step of thermo-elastic-plastic analysis, thermal analysis was executed. A heat input condition simulating an actual welding condition was set, and thermal analysis was executed while setting minute time intervals from the beginning of welding to the end thereof, thereby calculating a heat history similar to actual welding. As a result, a history of temperature distribution of the global model including the welded part 3 and the vicinity thereof was obtained as an analysis result.

In the second step, a constraint condition which would be a boundary condition necessary for welding distortion simulation that was able to simulate a constraint of an actual structure was set. Like the constraint condition set at the time of elastic analysis on the global model executed in this embodiment, three constraints in the X, Y, and Z directions were given to the node 41 belonging to the end 7 of the global model shown in FIG. 7, and constraints in the Y and Z directions were given to the node 42, and a constraint in the Z direction was given to the node 43.

In the third step, after the constraint conditions for the end 7 were set, nonlinear thermo-elastic-plastic analysis was carried out with the analysis result of the heat history of the global model obtained in the first step of the thermo-elastic-plastic analysis being as an input condition. Through the thermo-elastic-plastic analysis, a strain history of the global model, a stress history thereof, or a displacement history of each node was obtained. The distortion of the whole welded structure was calculated from the displacement history.

Also, when the conventional inherent strain method was executed, it was necessary to calculate the inherent strain distribution at the welded part 3 and the vicinity thereof through thermo-elastic-plastic analysis at first. For this reason, the mesh configuration of the local model 4 of the thermo-elastic-plastic analysis carried out in this embodiment was applied.

FIG. 8 shows a local model. This figure shows the local model 4 seen from a different view point and having a different mesh configuration, and shows an end 8 of the local model 4.
Although a heat input condition necessary for analysis was set like this embodiment, as shown in FIG. 8, regarding the constraint condition, an appropriate constraint was set for the end 8 opposite to the boundary part 6 between the local model 4 and a global model 5. That is, constraints in the X, Y, and Z directions were given to a node 81 of the end 8, constraints in the Y and Z directions were given to a node 82 of the end 8, and a constraint in the Z direction was given to a node 83 of the end 8.

After the constraint condition was set, the same analysis technique as the thermo-elastic-plastic analysis method of the local model was executed in order to execute thermo-elastic-plastic analysis on the local model 4. As a result, a temperature history, a strain history, a stress history, etc., of the welded part 3 and the vicinity thereof were obtained as inherent strains.

Next, an inherent strain in the vicinity of the welded part was extracted from the above-explained results, and such an inherent strain was given to a global model which had the same mesh configuration as that of the global model shown in FIG. 7 and used in this embodiment and which included no strain, stress, temperature, etc., at all elements and nodes so far.

After the inherent strain was given to the global model, the constraint condition for the global model was set, and elastic analysis was executed. Regarding the setting of the constraint condition, as shown in FIG. 7, three constraints in the X, Y, and Z directions were given to the node 41 belonging to the end 7 of the global model, constraints in the Y and Z directions were given to the node 42, and a constraint in the Z direction was given to the node 43. Thereafter, elastic analysis on the global model was executed, and a whole distortion was calculated.

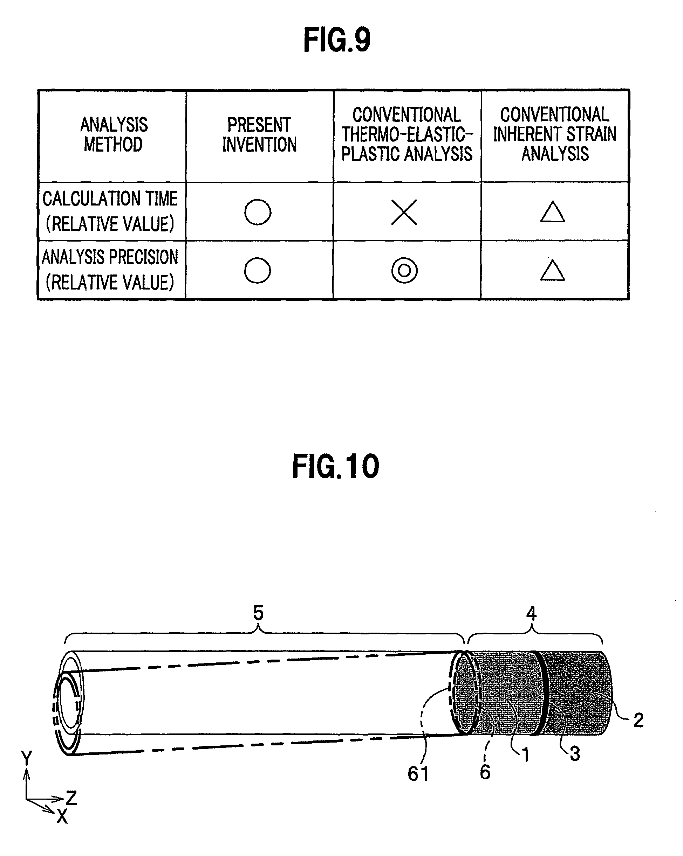

FIG. 9 is a comparison table of an analysis time and an analysis precision among the welding distortion simulation method of the present invention, the conventional thermo-elastic-plastic analysis, and the conventional inherent strain method. Although the conventional thermo-elastic-plastic analysis has the highest analysis precision of a distortion amount (which is indicated by a double circle mark in the table), the simulation method of the present invention obtains a sufficient analysis precision (which is indicated by a circle mark in the table) that is better than the conventional inherent strain method (which is indicated by a triangle mark in the table).

On the other hand, regarding the analysis time, the conventional thermo-elastic-plastic analysis has the longest time (which is indicated by a cross mark in the table), and completion of analysis is impossible in some cases depending on an analysis target. On the other hand, the simulation method of the present invention can realize a remarkably shorter analysis time (which is indicated by a circle mark in the table) than the inherent strain method (which is indicated by a triangle mark). Also, because the simulation method of the preset invention does not require steps of calculating an inherent strain and giving it to the global model, the analysis time becomes shortest.

### <Example 2>

Next, an explanation will be given of a second example in which the simulation method of this embodiment is applied to a welded structure having a specific shape defined beforehand as another example. The second example relates to a case in which setting of the constraint condition for the boundary part in the first example is changed.

The analysis target in this example is a pipe-like welded structure shown in FIG. 3 which is same as the one used in the first example. Moreover, the simulation method is same as the first example other than a process relating to setting of the constraint condition of the boundary part. That is, the simulation method of the second example comprises a step of converting, through the step of generating a mesh, a structure subjected to analysis into a global model, and extracting a local model including a welded part needing a thermo-elastic-plastic analysis from the global model of the welded structure which is the analysis target and which needs elastic analysis, a step of performing thermo-elastic-plastic analysis on the local model without giving a constraint to the boundary of the local model and to the boundary part of the remaining portion of the global model, a step of reconstructing the global model by pasting the local model including final strain distribution and stress distribution after welding obtained by the thermo-elastic-plastic analysis on the remaining portion of the global model in consideration of a displacement caused by the thermo-elastic-plastic analysis after completion of the step of the thermo-elastic-plastic analysis on the local model, and a step of obtaining a welding distortion of the structure and a stress applied thereto through an elastic analysis on the global model.

The four analysis steps: the step of generating a mesh of a global model; the step of extracting a local model needing a thermo-elastic-plastic analysis; the step of performing thermo-elastic-plastic analysis on the local model; and the step of performing elastic analysis on the global model are same as the steps of the first example. However, setting of the constraint condition to the boundary part necessary at the time of thermo-elastic-plastic analysis on the local model and reconstruction of the global model differ from those of the first example.

In this example, the boundary part of the local model is not constrained. However, when thermo-elastic-plastic analysis is performed on the local model, the end of the local model is constrained. An explanation will be given of how to constrain the end of the local model in detail with reference to FIG. 8. In this example, the local model 4 shown in FIG. 8 is a model extracted from the global model shown in FIG. 3, and the mesh configuration is same as the part of the global model.

When the constraint condition is set to the end of the local model 4 according to this example, as shown in FIG. 8, an appropriate constraint is set to the end 8 which is opposite to the boundary part 6 of the local model 4. For example, constraints in the X, Y, and Z directions are set to the node 81, constraints in the Y and Z directions are set to the node 82, and a constraint in the Z direction is set to the node 83.

Also, when the global model needing an elastic analysis is reconstructed, the remaining portion 5 of the global model is pasted on the local model 4 including the result of thermo-elastic-plastic analysis. This is because no constraint condition is set to boundary parts of the local model 4 and the remaining portion 5 of the global model respectively at the time of thermo-elastic-plastic analysis on the local model 4, so that displacement is generated at respective nodes of the boundary part 6 of the local model 4, which brings about mismatch of coordinates of respective nodes of the boundary part of the remaining portion of the global model. In order to cope with such a problem, the remaining portion 5 of the global model is pasted on the local model 4. More specifically, the remaining portion 5 of the global model is moved by the displacement generated by thermo-elastic-plastic analysis (in order to cancel the displacement) and pasted.

FIG. 10 is a diagram showing how the global model is reconstructed according to the second example. As shown in FIG. 10, the nodes of the boundary part 61 of the remaining portion 5 of the global model before thermo-elastic-plastic analysis is performed on the local model 4 are moved, and are fitted to respective nodes of the boundary part 6 of the local model 4 having undergone the thermo-elastic-plastic analysis.

Although it takes a large amount of time in order to fit the nodes of a boundary part 61 of the remaining portion 5 of the global model to respective nodes of the boundary part 6 of the local model 4, this node fitting is limited to only nodes of the boundary part 61. Therefore, a necessary time can be remarkably reduced in comparison with the step of giving an inherent strain of a large number of nodes in the vicinity of the welded part to the remaining portion 5 of the global model which is necessary in the conventional inherent strain method.
Conversely, the local model 4 may be pasted on the remaining portion 5 of the global model in order to reconstruct the global model.

After the global model is reconstructed by fitting nodes of the boundary part 61 of the remaining portion 5 of the global model to respective nodes of the boundary part 6 of the local model 4, an elastic analysis is performed using the reconstructed global model, thereby calculating a welding distortion.
The analysis time of the simulation method of the second example and the analysis precision thereof are same as those in the comparison table shown in FIG. 9.

### «Summary»

This embodiment brings about the following effects. That is, according to the welding distortion simulation of this embodiment, a residual stress and a residual strain can be calculated through thermo-elastic-plastic analysis on the vicinity of a welded part, and elastic analysis on the whole structure is enabled without any calculation and measurement of an inherent strain and a step of giving such an inherent strain to a global model. As a result, it is possible to predict a distortion of a large welded structure within a short time and with a high precision.
Also, as is explained in the second example, it is possible to predict a distortion of a large welded structure within a short time and with a high precision through a welding distortion simulation having no local model constrained.

### «Additional Matters»

The embodiment explained above is appropriate in order to embody the present invention, but the present invention is not limited to this embodiment, and can be changed and modified in various forms within the scope and the spirit of the present invention.

For example, the explanation was given of the embodiment in which numerical analysis using a three-dimensional analysis model is applied. However, a one-dimensional or two-dimensional analysis model may be used.

Also, according to the above-explained embodiment, equal to or greater than two boundary parts of the local model may be formed when the local model is extracted, and a mesh may be cut and formed so as to be parallel or non-parallel to the plane of the mesh, not along the plane of the mesh. When a mesh is cut and formed, a cut plane formed by such cutting may be used as a new mesh plane.

According to the above-explained embodiment, the user specified the boundary part of the local model as parameters input through the input unit. However, a program which can set the boundary part at the time of extracting the local model and which accomplishes desired analysis time and analysis precision may be prepared beforehand.

The specific hardware and software configurations may be changed and modified within the scope and the spirit of the present invention.

The welding distortion simulation method of the present invention is effective for an analysis of a welding distortion of a large welded structure regardless of the shape thereof.

## Claims

1. A welding distortion simulation method for a simulation device which models a welded structure and performs numerical analysis, wherein
the simulation device includes a memory unit that stores a global model of the welded structure generated with a mesh for the numerical analysis, and
the simulation device also includes a control unit that executes steps of:
extracting a local model including a model corresponding to a welded part of the welded structure from the global model;
constraining a node of a mesh forming a boundary part between the extracted local model and a remaining portion of the global model;
performing thermo-elastic-plastic analysis that is the numerical analysis on the local model;
fitting the local model to the remaining portion of the global model in order to reconstruct the global model; and
releasing the constraint in the reconstructed global model, and performing elastic analysis that is the numerical analysis on the reconstructed global model, thereby calculating a distortion of the welded structure.

2. The welding distortion simulation method according to claim 1, wherein a mesh used for the remaining portion of the global model is rougher than a mesh used for the local model.

3. A welding distortion simulation method for a simulation device which models a welded structure and performs numerical analysis, wherein
the simulation device includes a memory unit that stores a global model of the welded structure generated with a mesh for the numerical analysis, and
the simulation device also includes a control unit that executes steps of:
extracting a local model including a model corresponding to a welded part of the welded structure from the global model;
performing thermo-elastic-plastic analysis that is the numerical analysis on the local model;
moving the local model or a remaining portion of the global model in order to cancel a displacement generated at the local model through the thermo-elastic-plastic analysis, and fitting the local model to the remaining portion of the global model in order to reconstruct the global model; and
performing elastic analysis that is the numerical analysis on the reconstructed global model, thereby calculating a distortion of the welded structure.
